# EUROPÄISCHE PATENTSCHRIFT

(11) **EP 3 909 479 B1**
(45) Veröffentlichungstag und Bekanntmachung des Hinweises auf die Patenterteilung: **10.07.2024**
(21) Anmeldenummer: 21171794.7
(22) Anmeldetag: 03.05.2021
(51) Int. Cl.: A47J 36/32

(54) **BESTIMMEN UND AUSFÜHREN EINES KOCHREZEPTS**
DETERMINATION AND EXECUTION OF A COOKING RECIPE
DÉTERMINATION ET RÉALISATION D'UNE RECETTE DE CUISINE

(30) Priorität: 15.05.2020 DE 102020206138
(43) Veröffentlichungstag der Anmeldung: 17.11.2021
(73) Patentinhaber: BSH Hausgeräte GmbH, 81739 München (DE)
(72) Erfinder: Gerber, Daniel, 93047 Regensburg (DE); Gorska, Magdalena, 02-769 Warsaw (PL); Kordt, Erik, 82178 Pucheim (DE); Rico Garcia, Cristina, 85521 Ottobrunn (DE); Szporer, Krzysztof, 03-028 Warsaw (PL)

(56) Entgegenhaltungen:
- EP-A1- 2 556 778
- DE-A1- 102016 218 016
- US-A1- 2014 324 899
- US-A1- 2017 139 902
- ANONYMOUS: "Rezepte bei Chefkoch.de", 28 June 2017 (2017-06-28), pages 1 - 13, XP055841305, Retrieved from the Internet <URL:https://web.archive.org/web/20170628022247/http://www.chefkoch.de/rezepte/kategorien> [retrieved on 20210915]

## Beschreibung

Die Erfindung betrifft das Bestimmen und Ausführen eines Kochrezepts. Insbesondere betrifft die Erfindung das Erstellen eines neuen Kochrezepts auf der Basis kulinarischen Fachwissens.

Eine Speise, insbesondere für den menschlichen Verzehr, kann zubereitet werden, indem einem Kochrezept gefolgt wird. Dieser Zubereitungsprozess stellt einen physikalischen und chemischen Herstellungsprozess dar, der mit der Herstellung einer Chemikalie in einem Labor vergleichbar ist. Das für diesen Prozess notwendige physikalische und chemische Fachwissen ist dabei jedoch häufig so anwenderfreundlich im Kochrezept hinterlegt und so alltäglich, dass es zu Unrecht nicht als physikalischer und chemischer Herstellungsprozess wahrgenommen wird. Das Kochrezept umfasst üblicherweise eine Bezeichnung der Speise, eine Liste von Zutaten und eine Abfolge von Verarbeitungsschritten. Manche Verarbeitungsschritte erfordern vorbestimmtes Küchenmaterial, Küchenwerkzeug oder ein Küchengerät wie einen Ofen, einen Mixer oder eine Rührmaschine. Sammlungen von Kochrezepten sind üblicherweise kategorisiert nach charakteristischen Bestandteilen einer Speise (etwa Fleisch, Fisch oder Gemüse), eine Einordnung in eine übliche Speisenfolge (etwa Vorspeise, Hauptgang, Nachspeise), einen Anlass (etwa schnelle Küche, Buffet, Einladung) oder eine Landesküche (etwa Italienisch, Orientalisch).

Das Befolgen von Rezepten gelingt üblicherweise den meisten Zubereitenden. Allerdings ist es ohne eine entsprechende Ausbildung oder viel Erfahrung beim Zubereiten von Speisen allgemein schwierig, ein bestehendes Rezept erfolgreich abzuwandeln oder ein neues Rezept zu erstellen, insbesondere wenn dabei bestimmten Vorgaben eingehalten werden sollen. Beispielsweise kann es einen guten Koch erfordern, um einzelne Speisen derart zu variieren, dass ein harmonisches und neues Menü entsteht.

Es wurde vorgeschlagen, ein Rezept abzuändern, indem eine Zutat durch eine andere ausgetauscht wird, die sich ähnlich verhält. Ein anderer Vorschlag berücksichtigt eine Wechselwirkung zwischen mehreren Zutaten und schlägt einen Austausch einer Zutat gegen mehrere vor. Trotzdem gelingt es damit nicht immer, ein Kochrezept für eine Speise zu erstellen, die Erwartungen eines Benutzers erfüllt.

Aus dem Stand der Technik sind dazu die Dokumente XP055841305 (Auszug der Internetseite "Chefkoch.de") und EP 2556778 A1 bekannt.

Eine der vorliegenden Erfindung zu Grunde liegende Aufgabe besteht in der Angabe einer verbesserten Technik, um ein Kochrezept zu erstellen, anzupassen oder zu kategorisieren und anschließend auszuführen. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Bereitstellen und Ausführen eines Kochrezepts zur Zubereitung einer Speise Schritte des Erfassens eines kulinarischen Konzepts, wobei die Speise das Konzept ausfüllt; wobei das Konzept wenigstens eine Rolle umfasst, deren Erfüllung für die Speise unabdingbar ist; wobei die Rolle eine Funktion oder Eigenschaft der Speise oder eines ihrer Bestandteile beschreibt; des Bestimmens von Zutaten und Verarbeitungsschritten zur Verarbeitung der Zutaten, um die wenigstens eine Rolle auszufüllen; des Bestimmens des Kochrezepts auf der Basis der bestimmten Zutaten und Verarbeitungsschritte und des Ausführens, insbesondere automatisierten Ausführens, des derartig bestimmten Kochrezepts mittels zumindest eines Küchengeräts. Als Küchengeräte kommen bspw. ein Ofen, ein Herd, eine Dunstabzugshaube, ein Mixer oder eine Kombination hiervon in Betracht. Besondere Vorteile ergeben sich, wenn die hier vorgestellte Erfindung in Verbindung mit einem sogenannten Food Processor als Küchengerät, wie dem Cooklt der BSH oder dem Thermomix, zum Einsatz kommt.

Erfindungsgemäß können eines oder mehrere kulinarische Konzepte vorgegeben sein, die jeweils durch eine Vielzahl von Speisen ausgefüllt werden können. Ein kulinarisches Konzept beschreibt, was entscheidend für die ihm zugeordneten Speisen ist und was nicht verloren gehen darf, damit eine Speise das Konzept ausfüllten kann. Beispielsweise können für das kulinarische Konzept eines Pfannkuchens eine Dicke, eine Garweise und ein Hauptbestandteil des Teigs angegeben sein. Ein Safrankuchen mag nicht viel Safran erfordern, wird der Safran jedoch ganz weggelassen, kann die Speise keinen Safrankuchen mehr darstellen.

Es wurde erkannt, dass nur relativ wenige kulinarische Konzepte ausreichen können, um einen üblichen Schatz an Kochrezepten eines Kulturkreises zu definieren. Beispielsweise können ca. 50 - 300 Konzepte ausreichen, um mehr als die Hälfte der landestypischen Speisen eines westeuropäischen Landes abzubilden. Durch die Beschränkung eines Kochrezepts auf eines der kulinarischen Konzepte kann es auch einem kochtechnischen Laien gelingen, ein Rezept neu zu erstellen, so dass die entsprechenden physikalischen und chemischen Randbedingungen eingehalten werden. Durch die Betrachtung von Rollen können Kombinationen geschmacklicher und nicht-geschmacklicher Aspekte umfasst werden, die den Charakter einer Speise bestimmen. Beispielhafte Funktionen umfassen eine Konsistenz, einen Geschmack, eine Farbe, einen Nährwert, eine Zutat, einen Verarbeitungsschritt, eine chemische Reaktion, eine Form, einen Geruch oder ein Aroma.

Erfindungsgemäß wird bestimmt, ob die Speise das Konzept noch erfüllen kann, wenn eine der Zutaten oder einer der Verarbeitungsschritte in vorbestimmter Weise geändert wird. Dabei kann die Zutat durch ihre Art und Menge bestimmt sein. Die Änderung kann insbesondere ein Hinzufügen, Weglassen, Austauschen, oder Ändern einer Menge der Zutat umfassen. Ferner kann die Verarbeitung der Zutat geändert werden, beispielsweise bezüglich eines Zeitpunkts des Hinzufügens oder in derArt der mechanischen Vorbereitung oder einer Erhitzung. So kann ein Benutzer des Verfahrens prüfen, ob er eine bestimmte Änderung am Kochrezept durchführen kann, ohne dadurch ein unbefriedigendes Kochergebnis zu riskieren. Beispielsweise kann der Austausch von Kirschen gegen Himbeeren in einer Nachspeise unproblematisch sein, in einem süßsauren Fleischgericht jedoch den Bereich des kulinarischen Konzepts verlassen. Eine ähnliche Bestimmung kann für die Abänderung eines Verarbeitungsschritts erfolgen. Ein Verarbeitungsschritt kann insbesondere ein mechanisches Prozessieren (etwa ein Schneiden, Raspeln, Hacken, Kneten oder Walken), ein Erhitzen oder Abkühlen, oder ein Zusammenführen einer Zutat zu einer oder mehreren anderen umfassen.

In noch einer weiteren Ausführungsform wird eine mögliche Änderung einer Zutat oder eines Verarbeitungsschritts bestimmt, sodass eine nach dem geänderten Kochrezept zubereitete Speise das kulinarische Konzept weiter erfüllt. So kann auf einfache und sichere Weise ein bestehendes Kochrezept variiert werden, beispielsweise um eine neue Alternative zu einem bekannten Kochrezept bereitzustellen. Die nach dem abgeänderten Kochrezept zubereitete Speise kann sich aufgrund der im Konzept gegebenen Freiheitsgrade signifikant von der Speise des ursprünglichen Kochrezepts unterscheiden, gleichzeitig aber nicht vollständig anders geartet sein. Mit hoher Wahrscheinlichkeit kann ein ansprechendes Ergebnis erzielt werden.

In einer weiteren Ausführungsform ist einem Konzept ein Kulturkreis zugeordnet. Beispielhafte Kulturkreise können westeuropäische, afrikanische, nahöstliche und fernöstliche Speisen bilden. Die Kulturkreise können auch feiner unterteilt sein, sodass beispielsweise zwischen vietnamesischer und Philippinischer Küche unterschieden werden kann. Etwa die Hälfte der von einem Kulturkreis typischerweise umfassten Kochrezepte beziehungsweise Speisen kann üblicherweise durch eine überschaubare Anzahl von einigen zehn bis wenigen hundert kulinarischen Konzepten ausgedrückt werden.

In noch einer weiteren Ausführungsform wird für ein vorbestimmtes Konzept und wenigstens eine vorbestimmte Zutat bestimmt, welche weitere Zutat zur Erfüllung einer noch unerfüllten Rolle des Konzepts in Frage kommt. Anders ausgedrückt kann zu einer vorbestimmten Zutat bestimmt werden, welche weitere Zutat sich für eine Kombination eignet, um eine vorbestimmte Rolle zu erfüllen. So kann beispielsweise eine Kombination von Zutaten bestimmt werden, um eine andere Zutat zu ersetzen.

Ferner kann ein Kontext bestimmt werden, in welchem eine Zutat eine vorbestimmte Rolle ausfüllen kann; wobei der Kontext eine chemische Reaktionsbedingung für die Zutat beschreibt; und wobei aus dem Kontext ein Verarbeitungsschritt für eine Zutat im Rezept bestimmt wird. Bestimmte chemische Reaktionen erfordern beispielsweise ein vorbestimmtes saures oder basisches Niveau, eine vorbestimmte Temperatur, die Anwesenheit eines Hilfsstoffs wie eines Emulgators oder die Abwesenheit eines Stoffs wie Fett oder Sauerstoff. Der Verarbeitungsschritt kann so bestimmt werden, dass die Reaktionsbedingung erfüllt ist und die chemische Reaktion auf eine vorbestimmte Weise ablaufen kann.

Eine Funktion oder Eigenschaft einer Zutat einer Speise ist erfindungsgemäß in Form einer Ontologie angegeben. So können insbesondere physio-chemische Aspekte verbessert repräsentiert sein. Die Taxonomie kann sich besonders eignen, um das Verfahren mittels einer Datenverarbeitungsanlage auszuführen. Dabei können praktisch beliebige Informationen miteinander verknüpft werden. Eine Flexibilität gegenüber derArt speicherbarer Informationen kann hoch sein. Eine Vielzahl Informationen kann ökonomisch abgelegt werden. Ein Zugriff auf die Informationen kann einfach und schnell erfolgen.

Eine Funktion oder Eigenschaft einer Zutat einer Speise kann in nicht zur Erfindung gehörenden Ausführungsbeispielen auch in Form einer Taxonomie angegeben sein. Die Taxonomie kann umfasste Informationen verbessert strukturieren, sodass bestimmte Operationen wie Einsortieren oder Finden erleichtert ablaufen können.

Nach einem zweiten Aspekt der vorliegenden Erfindung umfasst ein weiteres Verfahren Schritte des Erfassens wenigstens eines kulinarischen Konzepts; wobei das Konzept wenigstens eine Rolle umfasst, deren Erfüllung für die Speise unabdingbar ist; wobei die Rolle eine Funktion oder Eigenschaft der Speise oder eines ihrer Bestandteile beschreibt; des Erfassens eines Kochrezepts; des Zuordnens des Kochrezepts zu einem Konzept, das von einer nach dem Kochrezept zubereiteten Speise ausgefüllt wird und des Ausführens, insbesondere automatisierten Ausführens, des zugeordneten Kochrezepts mittels zumindest eines Küchengeräts.

Das Verfahren kann dazu verwendet werden, ein bestehendes Kochrezept zu kategorisieren und ihm ein kulinarisches Konzept zuzuordnen. Insbesondere kann eine Vielzahl von Kochrezepten, beispielsweise in Gestalt einer Sammlung, automatisiert kategorisiert werden. Kulinarische Beziehungen zwischen den Speisen, die den Kochrezepten zugeordnet sind, können aufgefunden und in der Folge verbessert genutzt werden. So kann es gelingen, zumindest einen Teil einer ansonsten schwer formalisierbaren Kenntnis eines professionellen oder geübten Kochs technisch zugänglich zu machen. Die entstehende Kategorisierung kann für die Auswahl oder Erstellung eines Kochrezepts besser handhabbar sein als eine bekannte Kategorisierung, beispielsweise nach einer Klasse von Gerichten, beispielsweise Suppen, Braten, Aufläufe und so weiter.

In einer Ausführungsform ist eine abschließende Sammlung von kulinarischen Konzepten vorbestimmt. Eine Speise beziehungsweise ein ihr zugeordnetes Kochrezept, die keines der kulinarischen Konzepte ausfüllt, kann verworfen werden. Es hat sich gezeigt, dass durch Verzicht auf einige wenige Speisen eine Vielzahl anderer Speisen erfolgreich behandelt werden kann.

Nach einem dritten Aspekt der vorliegenden Erfindung umfasst eine Vorrichtung eine Datenbank mit wenigstens einem kulinarischen Konzept; wobei ein kulinarisches Konzept wenigstens eine Rolle umfasst, deren Erfüllung für die Speise unabdingbar ist; wobei die Rolle eine Funktion oder Eigenschaft der Speise oder eines ihrer Bestandteile beschreibt; eine Verarbeitungseinrichtung, die dazu eingerichtet ist, ein Kochrezept auf der Basis des wenigstens einen Konzepts zu bestimmen und zumindest ein Küchengerät zum Ausführen, insbesondere automatisierten Ausführen, des derartig bestimmten Kochrezepts. Alle genannten Elemente (Datenbank, Verarbeitungseinrichtung und Küchengerät) können innerhalb eines Hausgeräts wie dem Cooklt der BSH integriert ausgeführt sein. Alternativ kommt auch eine Ausführung der Vorrichtung als verteiltes System in Betracht, beim dem sich die Datenbank bspw. auf einem Server im Internet befindet.

Nach einem vierten Aspekt der vorliegenden Erfindung umfasst eine weitere Vorrichtung eine Datenbank mit wenigstens einem kulinarischen Konzept; wobei ein kulinarisches Konzept wenigstens eine Rolle umfasst, deren Erfüllung für die Speise unabdingbar ist; wobei die Rolle eine Funktion oder Eigenschaft der Speise oder eines ihrer Bestandteile beschreibt; eine Verarbeitungseinrichtung, die dazu eingerichtet ist, ein vorbestimmtes Kochrezept dem Konzept zuzuordnen, falls eine auf der Basis des Kochrezepts zubereitete Speise das Konzept erfüllt; und zumindest ein Küchengerät zum Ausführen, insbesondere automatisierten Ausführen, des zugeordneten Kochrezepts.

Die Verarbeitungseinrichtung einer hierin beschriebenen Vorrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Einige nicht-abschließende Aspekte von Ausführungsformen der Erfindung werden nun unter Bezug auf die beiliegenden Figuren genauer beschrieben, in denen:
- Figur 1: eine Vorrichtung;
- Figur 2: ein erstes Ablaufdiagramm;
- Figur 3: ein zweites Ablaufdiagramm; und
- Figur 4: beispielhafte Strukturen
darstellt.

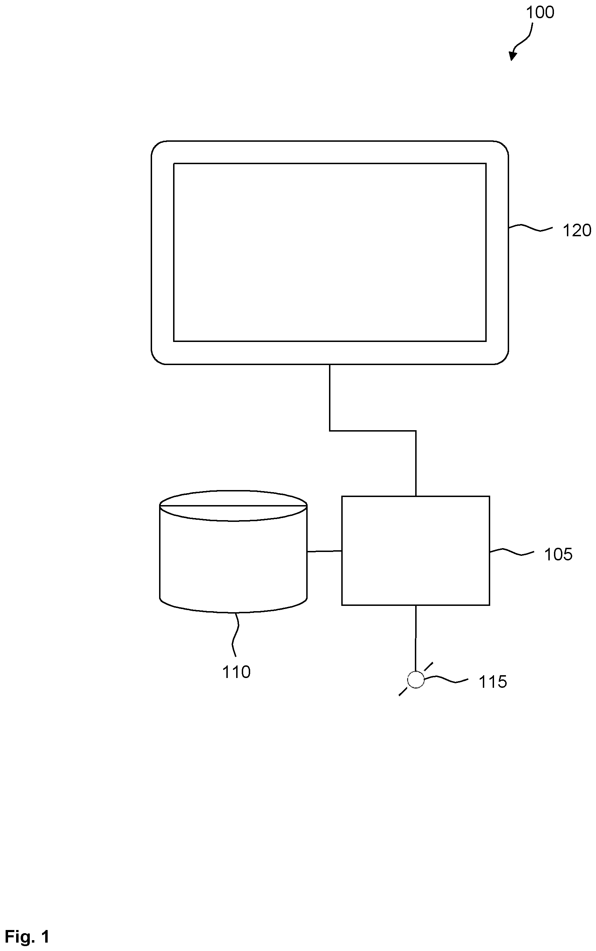

Figur 1 zeigt eine Vorrichtung 100, die dazu eingerichtet ist, Informationen zu verarbeiten, die ein Kochrezept betreffen. Die Vorrichtung 100 umfasst wenigstens eine Verarbeitungseinrichtung 105 und einen Datenspeicher 110. Bevorzugt sind darüber hinaus eine Eingabevorrichtung 115 und/oder eine Ausgabevorrichtung 120 sowie zumindest ein Küchengerät vorgesehen.

Die Eingabevorrichtung 115 ist stellvertretend als Schnittstelle dargestellt; es können beliebige Eingabevorrichtungen 115 verwendet werden, beispielsweise eine Tastatur, eine Spracheingabe, ein Touchscreen oder ein Trackpad. Die Ausgabevorrichtung 120 ist beispielhaft als Bildschirm dargestellt; auch hier sind verschiedene weitere Ausführungsformen möglich, etwa eine akustische Ausgabe oder ein Drucker zur Ausgabe von Text und/oder einer Graphik. Die Verarbeitungseinrichtung 105 kann als Mikrocomputer ausgebildet sein und einen oder mehrere Prozessoren umfassen. Der Datenspeicher 110 kann in beliebiger Weise organisiert sein, beispielsweise als Datenstruktur, als Datei oder als Datenbank. Seine physische Realisierung kann auf beliebige Weise erfolgen und beispielsweise einen Halbleiter-Speicher, eine Festplatte oder einen optischen Speicher umfassen. Komponenten der Vorrichtung 100 können an unterschiedlichen Orten vorgesehen und mittels eines Kommunikationsnetzwerks miteinander vernetzt sein.

Die Vorrichtung 100 ist bevorzugt dazu eingerichtet ein hierin beschriebenes Verfahren auszuführen. Unterschiedliche hierin beschriebene Verfahren können auf derselben Vorrichtung 100 oder auf verschiedenen Vorrichtungen 100 ausgeführt werden.

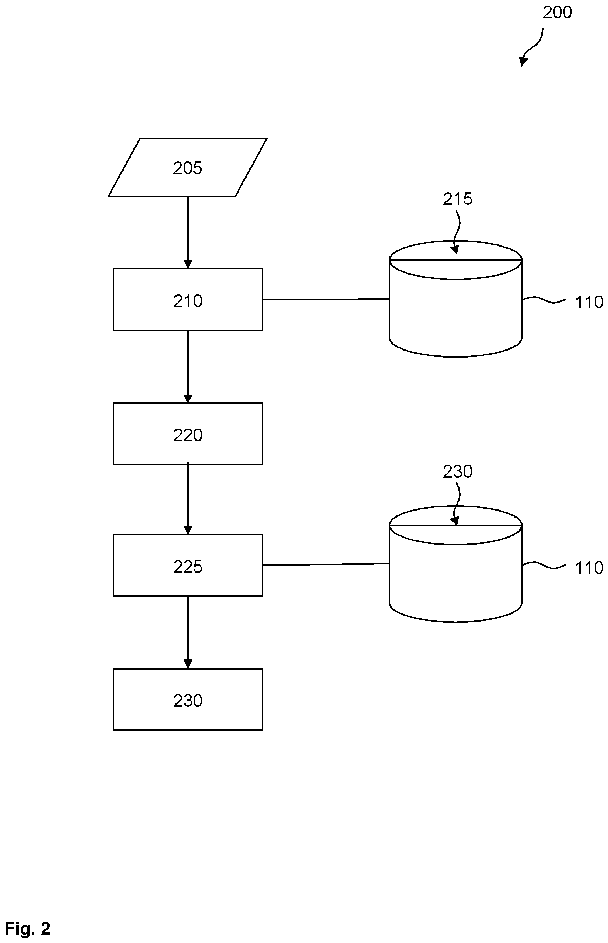

Figur 2 zeigt ein Ablaufdiagramm eines Verfahrens 200 zur Erstellung oder Abwandlung eines Kochrezepts. In einem Schritt 205 kann eine Eingabe eines Benutzers erfasst werden. In einem Schritt 210 kann auf der Basis kulinarischer Informationen 215, die insbesondere im Datenspeicher 110 der Vorrichtung 100 aufgenommen sein können, ein kulinarisches Konzept 220 zur Erstellung eines Kochrezepts bestimmt werden. Die kulinarischen Informationen 215 können insbesondere Eigenschaften von Zutaten, mögliche chemische Reaktionen zwischen Zutaten beziehungsweise von ihnen umfassten Inhaltsstoffen, und Verarbeitungsschritte für Zutaten umfassen. Die Informationen 215 können als kleinste Informationseinheiten der Kochtechnik aufgefasst werden.

Das kulinarische Konzept 220 kann eine oder mehrere Rollen umfassen, die jeweils einen Aspekt einer Speise beschreiben können, wobei die Rolle unbedingt erfüllt sein muss, damit die betroffene Speise unter das kulinarische Konzept 220 fällt beziehungsweise das Konzept 220 ausfüllt. Eine erste beispielhafte Rolle kann ein physisches Erscheinungsbild der Speise betreffen, das beispielsweise angibt, dass ein Blechkuchen oder ein Pfannkuchen flach oder ein Braten kompakt sein soll. Auch beispielsweise eine Größe oder ein Gewicht der Speise können beschränkt sein, beispielsweise im Fall von Keksen. Eine zweite beispielhafte Rolle kann eine Beschaffenheit der Speise ausdrücken, beispielsweise eine Knusprigkeit, eine Weichheit, eine Lockerheit, eine Cremigkeit, eine Sämigkeit, eine Zähigkeit, eine Mürbheit oder eine Klebrigkeit. Eine dritte beispielhafte Rolle kann eine Zubereitungsart umfassen, beispielsweise in einer Pfanne gebraten, in einem Ofen gebacken, frittiert oder gekocht. Eine vierte beispielhafte Rolle kann eine für die Speise charakteristische Zutat betreffen, beispielsweise Fleisch, Ingwer, Kokosmilch oder Pasta. Eine fünfte beispielhafte Rolle kann ein Aroma der Speise betreffen, beispielsweise süß, sauer, bitter, scharf, rauchig oder fruchtig.

Es ist zu beachten, dass eine Rolle auch eine Zutat oder ein Zubereitungsmittel umfassen kann, das von der Speise letztlich nicht umfasst ist. Beispielsweise wird eine Pasta in Wasser gekocht, wobei das Wasser essentiell für den Charakter der zubereiteten Speise sein kann, selbst wenn das Wasser selbst nicht verzehrt wird. Ähnlich kann mit einem Gewürz umgegangen werden, das vor dem Servieren aus einer Speise wieder entfernt wird, beispielsweise ein Lorbeerblatt in einer Bratensauce oder eine Zitronenscheibe zur Aromatisierung einer Hühnerkeule.

Weitere beispielhafte Rollen umfassen eine übliche Serviertemperatur, eine übliche Menge für eine Portion oder das ganze Gericht, oder einen Nährwert der Speise. Weitere oder andere Rollen sind ebenfalls möglich und von allen genannten Rollen können jeweils keine, eine oder mehrere für eine Speise vorgegeben sein. In einer weiteren Ausführungsform kann eine Rolle auch mehrere Funktionen vorgeben.

Das kulinarische Konzept 220 gruppiert Speisen beziehungsweise ihnen zugeordnete Kochrezepte, die eine kulinarische Verwandtschaft aufweisen. Dabei sind die Rollen so definiert, dass ihre Erfüllung gesichert sein muss, damit eine Speise ein vorbestimmtes Konzept 220 ausfüllt. Beispielsweise kann eine Suppe verändert werden, indem sie kalt serviert wird. Ist die Konsistenz einer Speise aber nicht mehr als flüssig zu bezeichnen, handelt es sich nicht um eine Suppe. Ein Konzept 220 kann Speisen umfassen, die nach den klassischen Kategorien eines Kochbuchs nichts miteinander zu tun haben, beispielsweise wenn sie die gleiche chemische Reaktion von Zutaten erfordern oder die gleiche Kombination von Aromen aufweisen. Das Konzept 220 selbst stellt noch kein Kochrezept dar und kann nicht ohne Weiteres zur Zubereitung einer Speise verwendet werden.

In einem Schritt 225 kann auf der Basis eines zuvor bestimmten kulinarischen Konzepts 220 ein Kochrezept bestimmt werden. Dazu können zuvor formalisierte Kochrezepte 230, die beispielsweise im Datenspeicher 110 der Vorrichtung 100 aufgenommen sein können, als Vorbild, Referenz oder Maßstab berücksichtigt werden. Die Kochrezepte 230 können auch Meta-Informationen umfassen, beispielsweise einen Landstrich, für den das Kochrezept 230 typisch ist, eine Historie oder Entwicklung des Kochrezepts 230, eine alternative Bezeichnung der betroffenen Speise, einen Anlass, zu dem die Speise üblicherweise gegessen oder getrunken wird, oder einen Verweis auf ein verwandtes Kochrezept 230. Es ist zu beachten, dass die Kochrezepte 230 auch zur Erstellung des kulinarischen Konzepts 220 verwendet werden können. Natürlich dienen all diese Schritte letztendlich dem Ausführen, insbesondere automatisierten Ausführen, des derartig bestimmten Kochrezepts mittels zumindest eines Küchengeräts. Dieser Schritt kann einfach mitgedacht werden, ohne dass auf ihn eigens eingegangen werden muss.

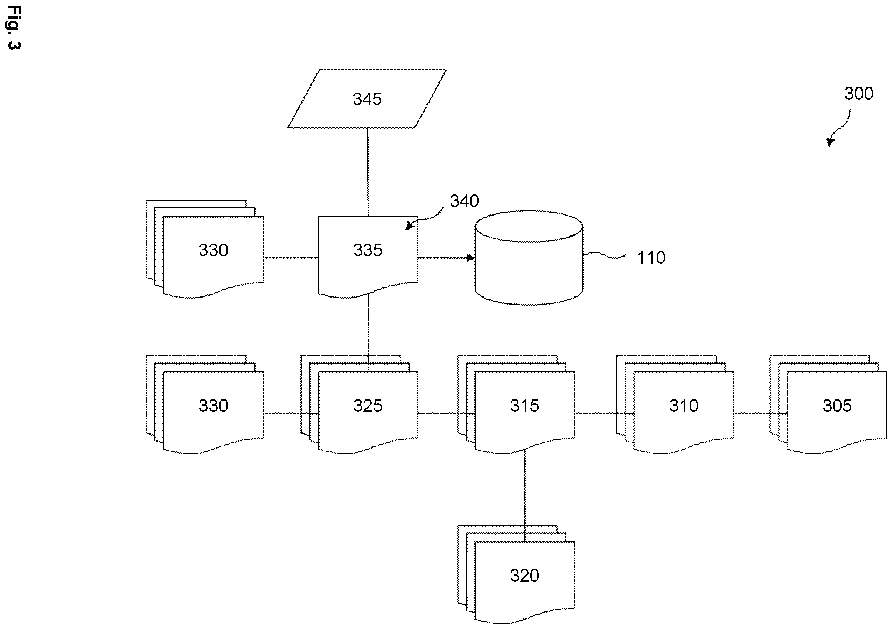

Figur 3 zeigt ein Verfahren 300 zur Formalisierung von kulinarischen Informationen 215, insbesondere zur Verwendung im Verfahren 200. Das Verfahren 300 kann mittels einer Vorrichtung 100 ausgeführt werden. Es ist zu beachten, dass die im Folgenden beschriebenen Schritte jeweils eine Art von Information umfassen und das Verfahren 300 auch als Struktur für kulinarische Informationen 215 aufgefasst werden kann.

In einem Schritt 305 können Anforderungen oder Beschränkungen bestimmt werden, die einzuhalten sind, damit eine Zutat oder ein von ihr umfasster Inhaltsstoff eine vorbestimmte Funktion erfüllen kann. Dies kann beispielsweise einen pH-Bereich umfassen, in dem eine vorbestimmte Reaktion ablaufen kann, oder einen Temperaturbereich, der für die Reaktion einzuhalten ist.

In einem Schritt 310 können physio-chemische Funktionen erfasst werden, die von einem Kochprozess umfasst sind. Beispielhafte Funktionen umfassen die Bräunung von Fleisch bei Anwendung von Wärme, das Garen von Gemüse oder das Denaturieren eines Eiweiß unter Hitze oder Druck.

In einem Schritt 315 kann eine Rolle bestimmt werden. Für eine bestimmte Rolle können physio-chemische Funktionen und/oder Anforderungen oder Beschränkungen bestimmt werden, die für die Erfüllung der Rolle erforderlich sind.

In einem Schritt 320 können mögliche Instanzen und Beschränkungen bestimmt werden, die insbesondere auf eine Zutat zurückzuführen sind.

In einem Schritt 325 kann ein Grundbaustein bestimmt werden, der eine oder mehrere vorbestimmte Rollen erfüllen kann. Eine Speise kann aus mehreren Grundbausteinen zusammengefügt werden. Beispielsweise kann ein Nudelgericht eine Pasta und eine Sauce als Grundbausteine umfassen, oder ein Kuchen einen Teig und einen Belag. Dazu kann in einem Schritt 330 eine kulinarische Spezifikation bestimmt werden.

In einem Schritt 335 kann ein Rezeptmodell 340 erstellt werden. Dazu können erneut kulinarische Spezifikationen 330 berücksichtigt werden. Das Rezeptmodell 340 kann in einem Schritt 345 von einem menschlichen Experten vorgegeben werden. Alternativ kann der Experte die Bildung eines kulinarischen Rezeptmodells 340 beeinflussen, etwa indem er ein automatisch bestimmtes Rezeptmodell 340 aufteilt oder mehrere Rezeptmodell 340 miteinander vereint. Es können auch manuell Elemente zu einem Rezeptmodell 340 hinzugefügt oder aus ihm entfernt werden. In einer Ausführungsform entspricht ein Rezeptmodell 340 einem kulinarischen Konzept 220.

Das Ergebnis der Bestimmungen kann im Datenspeicher 110 abgelegt werden. Es ist bevorzugt, dass der Datenspeicher 110 eine Vielzahl solcher Informationen enthält, und dass auf die umfassten Informationen effizient zugegriffen werden kann, beispielsweise indem ein Suchbegriff oder eine Suchanfrage gestellt werden können und der Datenspeicher 110 mit einer oder mehreren Informationen antwortet, die auf den Suchbegriff oder die Suchanfrage passen. Auch bei dieser Ausführungsform des Verfahrens gilt natürlich wieder, dass die Schritte letztendlich dem Ausführen, insbesondere automatisierten Ausführen, des Kochrezepts mittels zumindest eines Küchengeräts dienen, so dass auf diesen Schritt nicht eigens hingewiesen werden muss.

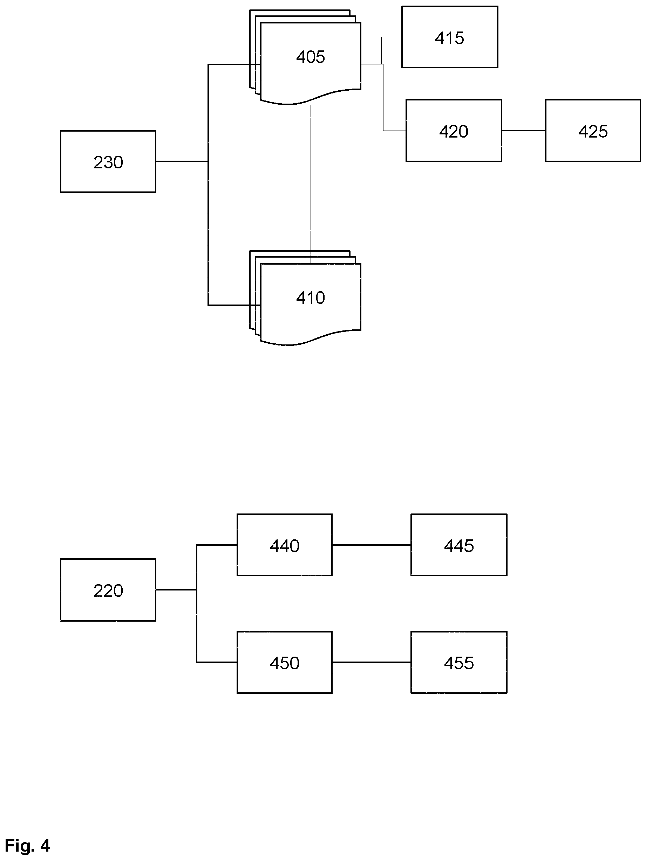

Figur 4 zeigt Komponenten, die in hierin beschriebenen Verfahren 200, 300 verwendet werden können. Dargestellt sind beispielhafte Strukturen, nach denen die betroffenen Komponenten aufgebaut sein können.

Im oberen Bereich von Figur 4 ist eine Struktur eines Kochrezepts 230 dargestellt, wie es als Referenz oder Trainingsdaten im Schritt 225 verwendet werden kann. Das Kochrezept 230 kann Zutaten 405 und Verarbeitungsschritte 410 umfassen. Ein Verarbeitungsschritt 410 betrifft eine oder mehrere Zutaten 405 und kann beispielsweise ein Zerkleinern, Rühren, Garen, Gehen lassen, Erwärmen oder Auskühlen umfassen. Mehrere Zutaten 405 können auf eine vorbestimmte Weise zusammengefügt werden. Ein Verarbeitungsschritt 410 kann zur Umsetzung ein Küchenutensil oder ein Küchengerät erfordern.

Eine Zutat 405 kann eine Referenz 415 zu einem Grundbaustein umfassen, der die Zutat 405 erfordert. Ferner kann eine Referenz 420 zu einer Rolle angegeben sein, die mittels einer Zutat 405 oder einer Kombination von Zutaten 405 ausgefüllt werden kann. Dazu kann eine physio-chemische Funktion 425 angegeben sein, welche durch die Zutat 405 erfüllt werden kann.

Im unteren Bereich von Figur 4 ist eine Struktur eines kulinarischen Konzepts 220, wie es beispielsweise im Schritt 225 des Verfahrens 200 von Figur 2 verwendet wird, dargestellt. Das Konzept 220 kann eine Struktur 440 aus Grundbausteinen umfassen, die ihrerseits kulinarische Anforderungen 445 umfassen kann. Ferner kann das Konzept 220 eine Struktur 450 aus Rollen umfassen, die physio-chemische Funktionen 455 umfassen kann.

### Bezugszeichen

- 100: Vorrichtung
- 105: Verarbeitungseinrichtung
- 110: Datenspeicher
- 115: Eingabevorrichtung
- 120: Ausgabevorrichtung

- 200: Verfahren
- 205: Eingabe erfassen
- 210: abstraktes Konzept erstellen
- 215: kulinarische Information
- 220: kulinarisches Konzept
- 225: Kochrezept bestimmen
- 230: Kochrezept

- 300: Verfahren
- 305: Anforderung oder Beschränkung erfassen
- 310: physio-chemische Funktion erfassen
- 315: Rolle bestimmen
- 320: Instanz oder Beschränkung bestimmen
- 325: Grundbaustein bestimmen
- 330: kulinarische Spezifikation bestimmen
- 335: Rezeptmodell erstellen
- 340: Rezeptmodell
- 345: Experte

- 405: Zutat
- 410: Verarbeitungsschritt
- 415: Referenz zu Grundbaustein
- 420: Referenz zu Rolle
- 425: physio-chemische Funktion

- 440: Struktur von Grundbausteinen
- 445: kulinarische Anforderung
- 450: Struktur von Rollen
- 455: physio-chemische Funktion

## Patentansprüche

1. Verfahren (200) zum Bereitstellen und Ausführen eines Kochrezepts (230) zur Zubereitung einer Speise, wobei das Verfahren folgende Schritte umfasst:
- Erfassen eines kulinarischen Konzepts (220), wobei die Speise das Konzept (220) ausfüllt;
- wobei das Konzept (220) wenigstens eine Rolle (315) umfasst, deren Erfüllung für die Speise unabdingbar ist;
- wobei die Rolle (315) eine Funktion der Speise oder eines ihrer Bestandteile beschreibt;
- Bestimmen von Zutaten und Verarbeitungsschritten zur Verarbeitung der Zutaten, um die wenigstens eine Rolle (315) auszufüllen;
- Bestimmen (225) des Kochrezepts (230) auf der Basis der bestimmten Zutaten und Verarbeitungsschritte; und
- Ausführen, insbesondere automatisiertes Ausführen, des derartig bestimmten Kochrezepts (230) mittels zumindest eines Küchengeräts;
**gekennzeichnet durch** den Schritt
- Bestimmen von physio-chemischen Funktionen, die für die Erfüllung der Rolle erforderlich sind, wobei eine Funktion einer Zutat der Speise in Form einer Ontologie angegeben ist; und
- Bestimmen, ob die Speise das Konzept (220) noch erfüllen kann, wenn eine der Zutaten oder einer der Verarbeitungsschritte in vorbestimmter Weise geändert wird.

2. Verfahren (200) nach Anspruch 1, wobei eine mögliche Änderung einer Zutat oder eines Verarbeitungsschritts bestimmt wird, sodass eine nach dem geänderten Kochrezept (230) zubereitete Speise das kulinarische Konzept (220) weiter erfüllt.

3. Verfahren (200) nach einem der vorangehenden Ansprüche, wobei einem Konzept (220) ein Kulturkreis zugeordnet ist.

4. Verfahren (200) nach einem der vorangehenden Ansprüche, wobei für ein vorbestimmtes Konzept (220) und wenigstens eine vorbestimmte Zutat bestimmt wird, welche weitere Zutat zur Erfüllung einer noch unerfüllten Rolle (315) des Konzepts (220) in Frage kommt.

5. Verfahren (200) nach einem der vorangehenden Ansprüche, wobei ein Kontext bestimmt wird, in welchem eine Zutat eine vorbestimmte Rolle (315) ausfüllen kann; wobei der Kontext eine chemische Reaktionsbedingung für die Zutat beschreibt; und wobei aus dem Kontext ein Verarbeitungsschritt für eine Zutat im Rezept bestimmt wird.

6. Vorrichtung (100), umfassend:
- eine Datenbank mit wenigstens einem kulinarischen Konzept (220);
- wobei ein Konzept (220) wenigstens eine Rolle (315) umfasst, deren Erfüllung für die Speise unabdingbar ist, wobei physio-chemische Funktionen bestimmt werden, die für die Erfüllung der Rolle erforderlich sind, wobei eine Funktion einer Zutat der Speise in Form einer Ontologie angegeben ist;
- wobei die Rolle (315) eine Funktion der Speise oder eines ihrer Bestandteile beschreibt;
- eine Verarbeitungseinrichtung, die dazu eingerichtet ist, ein Kochrezept (230) auf der Basis des wenigstens eines Konzepts (220) zu bestimmen und zu bestimmen, ob die Speise das Konzept (220) noch erfüllen kann, wenn eine der Zutaten oder einer der Verarbeitungsschritte in vorbestimmter Weise geändert wird; und
- zumindest ein Küchengerät zum Ausführen, insbesondere automatisierten Ausführen, des derartig bestimmten Kochrezepts (230).

## Claims

1. Method (200) for providing and executing a cooking recipe (230) for preparing a dish, wherein the method comprises the following steps:
- recording a culinary concept (220), wherein the dish fulfils the concept (220);
- wherein the concept (220) comprises at least one role (315), the fulfilment of which is imperative for the dish;
- wherein the role (315) describes a function of the dish or one of its components;
- determining ingredients and processing steps for processing the ingredients in order to fulfil the at least one role (315);
- determining (225) the cooking recipe (230) on the basis of the determined ingredients and processing steps and
- executing, in particular executing in an automated manner, the cooking recipe (230) determined in this manner by means of at least one kitchen appliance;
**characterised by** the step
- determining physio-chemical functions that are required for the fulfilment of the role, wherein a function of an ingredient of the dish is specified in the form of an ontology; and
- determining whether the dish can still fulfil the concept (220) if one of the ingredients or one of the processing steps is changed in a predetermined manner.

2. Method (200) according to claim 1, wherein a possible change of an ingredient or a processing step is determined so that a dish that is prepared according to the changed cooking recipe (230) still fulfils the culinary concept (220).

3. Method (200) according to one of the preceding claims, wherein a cultural area is allocated to a concept (220).

4. Method (200) according to one of the preceding claims, wherein for a predetermined concept (220) and at least one predetermined ingredient it is determined which further ingredient is suitable for fulfilling a still unfulfilled role (315) of the concept (220).

5. Method (200) according to one of the preceding claims, wherein a context is determined in which an ingredient can fulfil a predetermined role (315); wherein the context describes a chemical reaction condition for the ingredient; and wherein from the context a processing step is determined for an ingredient in the recipe.

6. Apparatus (100), comprising:
- a database having at least one culinary concept (220);
- wherein a concept (220) comprises at least one role (315), the fulfilment of which is imperative for the dish, wherein physio-chemical functions are determined that are required for the fulfilment of the role, wherein a function of an ingredient of the dish is disclosed in the form of an ontology;
- wherein the role (315) describes a function of the dish or one of its components;
- a processing facility that is configured so as to determine a cooking recipe (230) on the basis of the at least one concept (220) and so as to determine whether the dish can still fulfil the concept (220) if one of the ingredients or one of the processing steps is changed in a predetermined manner; and
- at least one kitchen appliance for executing, in particular executing in an automated manner, the cooking recipe (230) that is determined in this manner.

## Revendications

1. Procédé (200) pour la mise à disposition et la réalisation d'une recette de cuisine (230) pour la préparation d'un repas, dans lequel le procédé comprend les étapes suivantes :
- saisie d'un concept culinaire (220), dans lequel le repas comble le concept (220) ;
- dans lequel le concept (220) comprend au moins un rôle (315), dont l'exécution est indispensable pour le repas ;
- dans lequel le rôle (315) décrit une fonction du repas ou de l'un de ses composants ;
- détermination d'ingrédients et d'étapes de traitement pour la préparation des ingrédients, afin de combler l'au moins un rôle (315) ;
- détermination (225) de la recette de cuisine (230) sur la base des ingrédients et étapes de traitement déterminés ; et
- réalisation, en particulier réalisation automatisée de la recette de cuisine (230) ainsi déterminée au moyen d'au moins un appareil de cuisine ; **caractérisé par** l'étape de
- détermination de fonctions physio-chimiques nécessaires pour l'exécution du rôle, dans lequel une fonction d'un ingrédient du repas est indiquée sous la forme d'une ontologie ; et
- détermination de la question de savoir si le repas peut encore combler le concept (220) lorsque l'un des ingrédients ou l'une des étapes de traitement est modifié(e) de façon prédéterminée.

2. Procédé (200) selon la revendication 1, dans lequel une possible modification d'un ingrédient ou d'une étape de traitement est déterminée de sorte qu'un repas préparé selon la recette de cuisine (230) modifiée continue à combler le concept culinaire (220).

3. Procédé (200) selon l'une des revendications précédentes, dans lequel un cercle culturel est affecté à un concept (220).

4. Procédé (200) selon l'une des revendications précédentes, dans lequel pour un concept prédéterminé (220) et au moins un ingrédient prédéterminé, il est déterminé quel ingrédient supplémentaire entre en ligne de compte pour l'exécution d'un rôle (315) non encore exécuté du concept (220).

5. Procédé (200) selon l'une des revendications précédentes, dans lequel un contexte est déterminé, dans lequel un ingrédient peut remplir un rôle prédéterminé (315) ; dans lequel le contexte décrit une condition de réaction chimique pour l'ingrédient et dans lequel une étape de traitement est déterminée pour un ingrédient dans la recette au départ du contexte.

6. Dispositif (100), comprenant :
- une base de données avec au moins un concept culinaire (220) ;
- dans lequel un concept (220) comprend au moins un rôle (315) dont l'exécution est indispensable pour le repas, dans lequel des fonctions physio-chimiques sont déterminées, lesquelles sont nécessaires à l'exécution du rôle, dans lequel une fonction d'un ingrédient du repas est indiquée sous la forme d'une ontologie ;
- dans lequel le rôle (315) décrit une fonction du repas ou de l'un de ses composants ;
- un dispositif de traitement, aménagé afin de déterminer une recette de cuisine (230) sur la base de l'au moins un concept (220) et de déterminer si le repas peut encore combler le concept (220) lorsque l'un des ingrédients ou l'une des étapes de traitement est modifié(e) de façon prédéterminée ; et
- au moins un appareil de cuisine pour la réalisation, en particulier la réalisation automatisée de la recette de cuisine (230) ainsi déterminée.
